# EUROPEAN PATENT SPECIFICATION

(11) **EP 3 895 526 B1**
(45) Date of publication and mention of the grant of the patent: **05.06.2024**
(21) Application number: 21168961.7
(22) Date of filing: 16.04.2021
(51) Int. Cl.: A01J 5/017, A01K 1/12

(54) **MILKING DEVICE, MILKING SYSTEM AND METHOD THEREFOR**
MELKVORRICHTUNG, MELKSYSTEM UND VERFAHREN HIERFÜR
DISPOSITIF DE TRAITE, SYSTÈME DE TRAITE ET SON PROCÉDÉ

(30) Priority: 17.04.2020 NL 2025365
(43) Date of publication of application: 20.10.2021
(73) Proprietor: BouMatic Technology B.V., 8304 AX Emmeloord (NL)
(72) Inventor: Slager, Jan, 8316 PT Marknesse (NL); Brink, Willem Johannes, 8271 GW IJsselmuiden (NL)
(74) Representative: Arnold & Siedsma

(56) References cited:
- EP-A2- 0 332 235
- WO-A1-00/04765
- US-A- 4 010 714
- US-A1- 2008 210 171
- US-A1- 2012 272 914

## Description

The present invention relates to a milking device for milking animals. The invention further relates to a milking system and milking parlour comprising a milking device and a method for milking an animal.

Milking devices are known in practice. The known milking devices comprise a milking claw to which teat cups are connected. In order to milk the animal to be milked the milker must hold the milking claw with one hand and place the teat cups on the teats of the animal to be milked one by one with the other hand.

US 4 010 714 A discloses a system for managing milking-cows in stanchion stool.

A drawback of the known milking devices is that many operations are required on the part of the milker before the teat cups are positioned on the teats of the animal to be milked. This has the result that the output of a milker is relatively low. The known milking devices further have the drawback that the operations are carried out by the milker in an ergonomically adverse posture.

In order to reduce some of the above stated problems milking devices are known wherein teat cups are moved upward from a position under the animal to be milked. These milking devices are positioned under the ground surface, for instance a cow stall. The milking device can be moved from a position under the animal toward the udder through an opening in the ground surface, after which a milker can attach the teat cups to the teats. A drawback of such known milking devices is that dirt, such as for instance manure, can find its way into the teat cups through the opening in the ground surface. This reduces hygiene and thereby increases the chance of infections, for instance of the udders.

It is an object of the present invention to obviate or at least reduce the above stated problems. It is a particular object to obtain a hygienic milking device with which animals can be milked in simple manner.

This object is achieved by a milking device according to claim 1 for milking animals..

Because the milking device according to the invention is configured to arrange teat cups from a position below the animal to be milked, there is no need for a robot arm with a lateral movement to attach the teat cups to the teats, this resulting in a more peaceful environment and so less stress for the animal. This increases animal welfare and generally also enhances the quality of the milk. A further advantage is that, when the milking device is in the milking state, a milker can connect two teat cups to the teats at the same time in simple manner. This increases the convenience of use during milking. Alternatively or additionally, this also increases the speed with which the teat cups can be connected, whereby more animals can be milked per unit of time.

When the milking device is in the rest state, the first and second stroke of the cylinder bring the milking device into the milking state. The milking state is the state wherein the teat cups are positioned at least partially above the ground surface, such that the teat cups are ready to be placed on the teats of the animal to be milked by a milker. The second stroke ensures that there is enough slack in the milk hoses to move the teat cups from the teat cup carrier to the teats and place them thereon.

The cylinder is also configured to bring the milking device from the milking state to the rest state using the first and second stroke of the cylinder.

If the cylinder brings the milking device from the rest state to the milking state, the first stroke is preferably performed prior to the second stroke. If the cylinder brings the milking device from the milking state to the rest state, the second stroke is preferably performed prior to the first stroke.

Performing the first stroke before the second stroke, when the milking device is brought from the rest state to the milking state, ensures that the milk hoses remain taut during the first stroke. By performing the second stroke before the first stroke, when the milking device is brought from the milking state to the rest state, the milk hoses are pulled taut before the first stroke is performed. This reduces the chance of kinks in the hoses, whereby there is less danger of wear of and/or damage to the milk hoses. The second stroke has the further advantage that, after milking, the teat cups are automatically removed from the teats, and can be placed into the teat cup carrier, by the retraction of the milk hoses.

The length of the second stroke is optionally set on the basis of the distance of the teat cup in the milking state to the udder of the animal to be milked such that it is possible to ensure that the milk hose extends substantially tautly downward during milking.

In an advantageous embodiment the cylinder can for instance take the form of a cylinder for the first stroke and, received therein, a piston for the second stroke. It will be apparent to the skilled person that the first and second stroke can also be performed wholly or partially simultaneously.

The piston for the second stroke preferably has arranged thereon an engaging element for engaging the milk hoses. By embodying a cylinder with a first and second stroke, i.e. both movements can be performed with a single cylinder, the milking device as a whole becomes more compact and is simpler to construct. Alternatively, the engaging element is operatively connected to the milk hoses.

In an embodiment according to the invention the cylinder is disposed substantially vertically to the ground surface during use.

Owing to the extension substantially vertically to the ground surface, a compact milking device is obtained. A further advantage is that the milk hoses are placed substantially vertically, whereby the milk hoses are shorter than in the milking devices known from the prior art. This enhances milk release, and additionally improves the hygiene of the milking device. Alternatively or additionally, the vertical cylinder ensures that there are few degrees of freedom in which the milking device and the teat cups need move, this reducing the chance of wear of the milking device. A further advantage of such a substantially vertical arrangement of the cylinder is that the hoses hang straight down.

In an embodiment according to the invention the milking device further comprises a closure for at least partially closing the ground surface, wherein in the rest state the closure closes the ground surface wholly and in the milking state it closes the ground surface partially.

Wholly closing the ground surface in the rest state makes it impossible for dirt to find its way onto the teat cup carrier, onto the milk hoses and/or into or onto the teat cups. By closing the ground surface at least partially in the milking state it is realized that the teat cups can be moved through the ground surface, and the chance of dirt ending up on the teat cup carrier and/or milk hoses is also reduced.

In an embodiment according to the invention the closure is connected to the frame for rotation over a rotation axis, wherein the closure comprises a cover plate and a milking plate, wherein in the rest state the cover plate closes the ground surface wholly and wherein the milking plate comprises a number of openings for receiving the number of teat cups for the purpose of partially closing the ground surface.

By providing a cover plate and a milking plate, both rotating about a rotation axis, a compact closure is obtained. In a preferred embodiment the rotation axis of the cover plate and the milking plate is the same rotation axis. A further advantage of the cover plate and the milking plate is that the hygiene of the milking device is increased. Because the milking plate preferably has only a number of openings adapted to the number of (and the shape of the) teat cups, dirt is also prevented from finding its way onto the teat cup carrier and/or the milk hoses in the milking state. The openings preferably have substantially the same shape as the cross-section of a teat cup, such that the opening substantially fits the teat cups.

In an embodiment according to the invention the cover plate and the milking plate are placed at a radial distance from the rotation axis, wherein the cover plate and the milking plate have respectively a cover axis and a milking axis extending from the rotation axis to respectively the centre point of the cover plate and the milking plate, wherein the cover plate and the milking plate are positioned perpendicularly of their cover axis and milking axis and parallel to the rotation axis, and wherein the cover axis and the milking axis are arranged at a plate angle.

The rotation axis is preferably provided on the frame, and the rotation axis preferably lies substantially straight under the opening of the ground surface. By placing the cover plate and milking plate at a radial distance from the rotation axis the simple switching between the cover plate and the milking plate is enabled in a compact manner. Because the cover plate and the milking plate are positioned perpendicularly of the cover axis and the milking axis, a reliable closure with the ground surface is obtained. Other elements are optionally also provided on the closure and/or the frame, for instance a brushing device for automatically cleaning the cover plate during rotation of the closure.

In an embodiment according to the invention the angle lies in the range of 20°-160°, the angle preferably lies in the range of 50°-130°, and the angle is most preferably about 90°.

With the above stated angles a compact closure is obtained. A further advantage of the above stated angles is that switching from cover plate to milking plate and vice versa can be done relatively quickly.

In an embodiment according to the invention the closure is rotated about the rotation axis by a rotation mechanism.

The rotation mechanism, for instance a rotation cylinder, enables the closure to be moved quickly and in simple manner from a rest state, in which the cover plate closes the ground surface, to a milking state in which the milking plate closes the ground surface at least partially.

In an embodiment according to the invention the closure comprises a flushing device for flushing the number of teat cups, wherein the flushing device is preferably arranged on the cover plate.

The flushing device is preferably arranged on an underside of the cover plate. Alternatively, it is also possible to provide, in addition to the cover plate and the milking plate, a flushing device on the rotation axis, wherein a flushing axis, which extends from the rotation axis to the centre point of the flushing device, forms a flushing angle with the cover axis and/or the milking axis. Arranging the flushing device on the closure makes it possible to wash the teat cups when the milking device is in the milking state. This increases the hygiene of the milking device and thereby reduces the chance of infections. The efficiency of the milking process as a whole is also increased.

In an embodiment according to the invention the milking device can be removed from the ground surface as a whole.

Because the milking device is removable as a whole, a modular milking device is obtained. The advantage hereof is that the milking device can be removed from the ground surface as a whole, for instance in the case of malfunction, wear or maintenance of the milking device. A first advantage of is that a new milking device can be placed in the ground surface immediately, whereby optimal use can be made of the milking parlour. A second advantage of the milking device being removable as a whole is that it can be repaired in for instance a workshop under controlled conditions, instead of the repairs having to be performed in the milking parlour.

In an embodiment according to the invention the frame comprises a number of guides for removal of the milking device from the ground surface.

The guides are preferably placed on the frame in a substantially horizontal direction, i.e. substantially parallel to the ground surface. Owing to the guides the milking device can be removed from the ground surface, for instance a cow stall, in simple manner. The guides can for instance co-act with a second pair of guides which are provided in the ground surface.

In an embodiment according to the invention the milking device further comprises a light source configured to project a status of the milking device.

The light source can for instance project light onto the udder of the animal to be milked. In a preferred embodiment it is possible for the light source to emit a different colour or intensity of light, depending on the milking protocol. It is thus possible for the light source to project a white light during milking of the animal and to project the green light when the milking has finished. An orange light could further for instance be projected, which indicates a warning, for instance in the event that a teat cup is unintentionally removed from the teat during milking. The light source can also be used to indicate animal-specific actions, for instance the fact that an animal is undergoing a treatment with antibiotics, due to which the milk from this animal must not end up in the milk tank. Alternatively or additionally, the light source can be used to indicate milk-specific actions, for instance an indication to the milker that the teats must be disinfected.

In an embodiment according to the invention the light source is configured to serve as work light.

The advantage of the light source serving as work light is that the milker has an improved view of the work location. Distinctive details, such as injuries to the teats, are hereby more likely to be noticed, this reducing the chance of further injuries and/or diseases for the animal. The light is preferably projected onto the udder of the animal to be milked so that the milker has a sufficiently good view during milking of the animal.

In an embodiment according to the invention the milking device comprises a valve unit for throughfeed of milk to at least one discharge conduit for consumption purposes and/or to a second discharge conduit for lower-quality uses.

The valve unit is preferably connected to the milk hoses. Owing to the valve unit, the milk can be discharged to a location, for instance a milk tank or a dumping location, in simple manner. This ensures in simple manner that the milk ends up at the right location, and the risk of mixing of milk with different purposes is prevented.

In an embodiment according to the invention the number of teat cups further comprises a pulsation chamber, wherein the milking device is configured to place the pulsation chamber under pressure during use, such that a teat cup liner closes the milk hose.

The pulsation chamber can be placed under a pressure of 0.05-0.5 bar, preferably 0.2 bar. It is hereby realized that the walls of the teat cup liner of the teat cup come to lie against each other, whereby the milk hose is effectively (largely) closed.

By closing the milk hose the teat cup liner can as it were operate as a vacuum valve. This has the effect that only the amount of air is drawn in that is necessary to suck the teat of the animal to be milked into the teat cup. This prevents "false" air from being drawn in. An advantage hereof is that it is prevented that the milking device no longer functions properly due to drawing in so-called "false" air. Alternatively or additionally, preventing drawing in of "false" air ensures that no harm is done to the milk carried through the milk hoses. The teat cups can hereby for instance be connected two by two by the milker in simple manner, without "false" air being drawn in.

The invention further relates to a milking system and milking parlour provided with such a milking system or a milking device according to the invention. The milking system comprises:
- a milking device according to any one of the embodiments described above;
- an RFID antenna arranged on the milking device;
- an animal RFID tag arranged on an animal to be milked; and
- a controller connected to the RFID antenna,
wherein the controller is configured to read the animal RFID tag with the RFID antenna for the purpose of recognizing the animal to be milked.

The milking system and/or the milking parlour provides similar advantages and effects as described for the milking device. The controller is able to recognize the cow by means of the animal RFID tag, after which the controller can for instance automatically bring the milking device from the rest state to the milking state. The advantage hereof is that the speed of milking of the animals is increased. The milking system preferably co-acts with the valve unit. The controller can hereby for instance automatically recognize by means of the animal RFID tag that the animal is undergoing treatment with antibiotics, after which the controller carries the milk to a dumping location by means of the valve unit and the second conduit.

In an embodiment according to the invention that the milking system further comprises a milker RFID tag arranged on a milker, wherein the controller is further configured to read the milker RFID tag with the RFID antenna for the purpose of recognizing the milker.

An advantage of arranging a milker RFID tag is that the controller can also use information of the milker when controlling the milking device. It is thus possible to bring the milking device from the rest state to the milking state when an animal is standing above the milking device and a milker is or comes near the milking device. If desired, the milker can also be given a signal, for instance that an animal to be milked is ready for milking.

The invention further relates to a method. The method comprises of:
- providing a milking device or milking system according to an embodiment according to the invention;
- moving the milking device from the rest state to the milking state;
- connecting the number of teat cups to a number of teats of the animal to be milked; and
- milking the animal.

The method provides similar advantages and effects as described for the milking device and the milking system.

In an embodiment according to the invention the method further comprises of:
- positioning the number of teat cups in or against a flushing device; and
- flushing a number of teat cups in a flushing state.

The method provides similar advantages and effects as described for the milking device and the milking system.

Further features, advantages and details of the invention are described on the basis of preferred embodiments thereof, wherein reference is made to the accompanying drawings, in which:
- figure 1 shows a perspective view of a milking device according to the invention;
- figures 2A-D show a perspective view of examples of different stages during movement of the cylinder of the milking device according to the invention;
- figure 3 shows a perspective view of the milking device, removed from a ground surface;
- figure 4 shows a perspective view of a milking system according to the invention;
- figure 5 shows a side view of a teat cup according to the invention; and
- figure 6 shows schematically a method according to the invention.

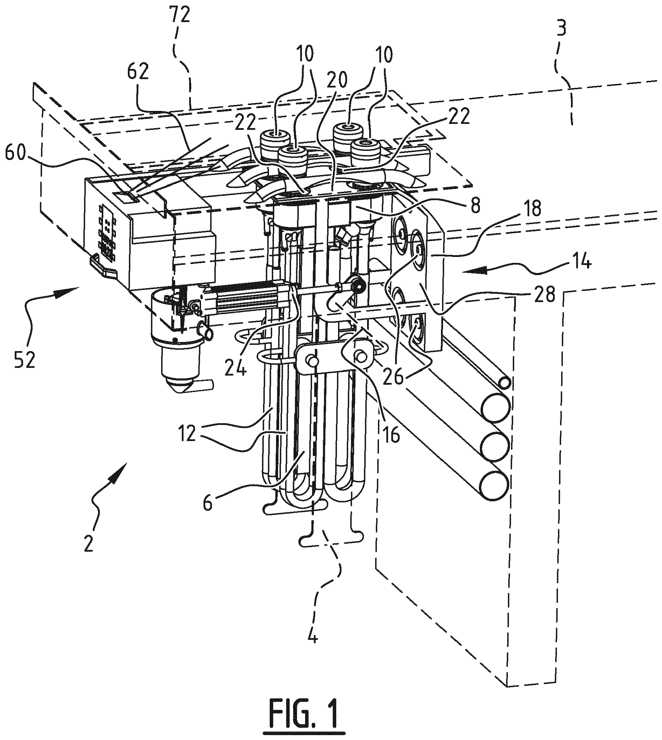

Milking device 2 (figure 1) comprises frame 4 and is arranged in ground surface 3, this being a cow stall in the shown embodiment. Operatively connected to frame 4 is cylinder 6. Arranged at an end of cylinder 6 close to ground surface 3 is teat cup carrier 8. Placed on teat cup carrier 8 are four teat cups 10, wherein teat cups 10 are placed such that they can be easily removed from teat cup carrier 8. Milk hoses 12 are connected to teat cups 10 for easy discharge of milk. Closure 14 is connected to frame 4 for rotation around rotation axis 16. Closure 14 comprises cover plate 18 and milking plate 20. Milking plate 20 comprises four openings 22, such that four teat cups 10 can be placed therethrough in simple manner.

The milking device in figure 1 is in milking state 52, wherein milking plate 20 partially covers ground surface 3 and teat cups 10 protrude at least partially above ground surface 3. Closure 14 is rotatable about rotation axis 16 by means of rotation cylinder 24. Flushing device 26 is further provided on underside 28 of cover plate 18. Light 62 can be projected by means of light source 60 provided on milking device 2 onto the location where the udder of the animal to be milked is situated during milking.

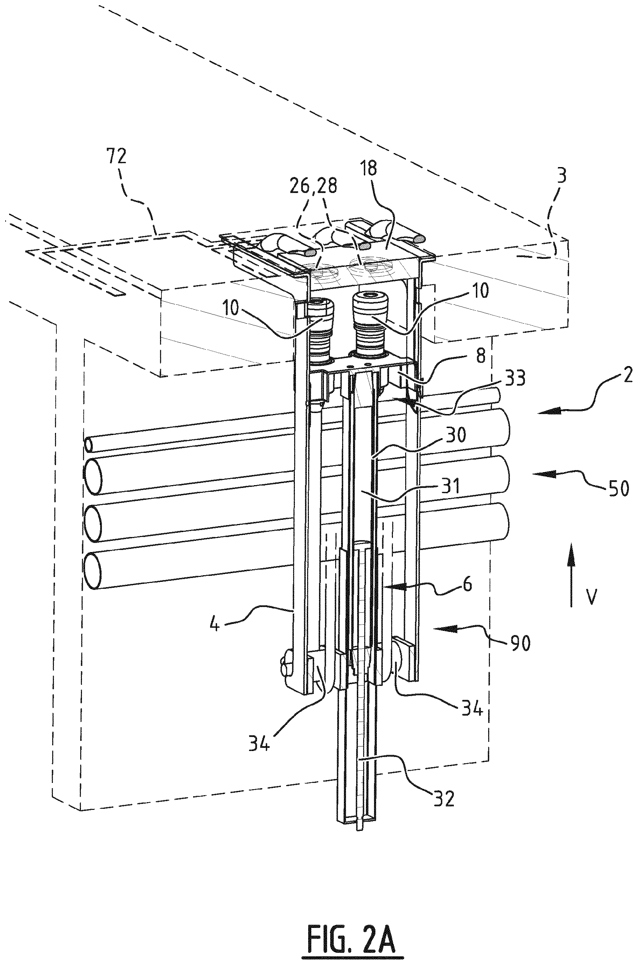

Cylinder 6 (figure 2A) comprises outer cylinder 30 which comprises an inner space 31. Outer cylinder 30 is connected to frame 4 for movement in substantially vertical direction V relative to ground surface 3. Arranged movably in inner space 31 of outer cylinder 30 is piston rod 32. Connected operatively to piston rod 32 are rollers 34, which are positioned on either side of piston rod 32. Teat cup carrier 8 is arranged on upper side 33 of outer cylinder 30. In figure 2A milking device 2 is in rest state 50. In rest state 50 cover plate 18 of closure 14 wholly closes ground surface 3 so that in rest state 50 no dirt is able to find its way onto or into teat cup carrier 8 and teat cups 10.

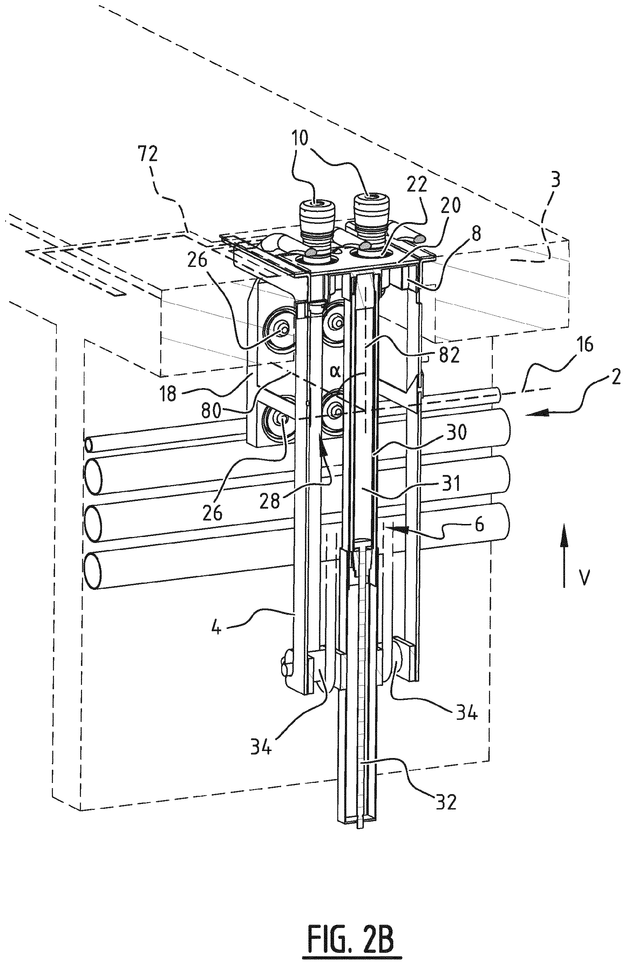

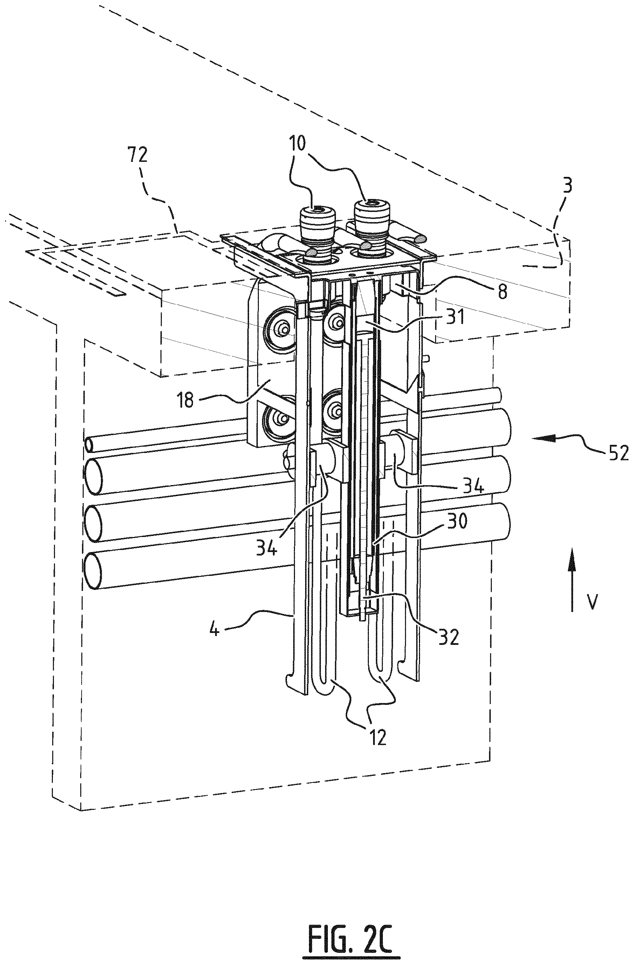

When closure 14 (figure 2B) is rotated about rotation axis 16 such that milking plate 20 partially closes ground surface 3, outer cylinder 30 can be moved upward in the direction of ground surface 3. Due to the upward movement of outer cylinder 30 teat cup carrier 8 moves teat cups 10 through openings 22 in milking plate 20, whereby teat cups lie partially above ground surface 3. Further shown is cover axis 80 which extends from rotation axis 16 to substantially the centre of cover plate 18 and milking axis 82 which extends from rotation axis 16 to substantially the centre of milking plate 20. Cover axis 80 and milking axis 82 are arranged at plate angle α, which is about 90° in the shown embodiment.
Piston rod 32 (figure 2C) can then be moved upward in inner space 31 of outer cylinder 30 in the direction of ground surface 3. Because rollers 34 are in the shown embodiment operatively connected to piston rod 32, rollers 34 are also moved upward. This creates slack in milk hoses 12 so that a milker has enough length of milk hose 12 to take teat cups 10 off teat cup carrier 8 and then move them upward for placing on the teats of an animal to be milked. Alternatively or additionally, rollers 34 are operatively connected to milk hoses 12, whereby milk hoses 12 are co-displaced in the direction of ground surface 3 when piston rod 32 is moved upward. In figure 2C milking device 2 is in milking state 52. In milking state 52 the teat cup carrier can be locked by means of an electronic lock so that it is guaranteed to be located close to ground surface 3 during milking state 52.

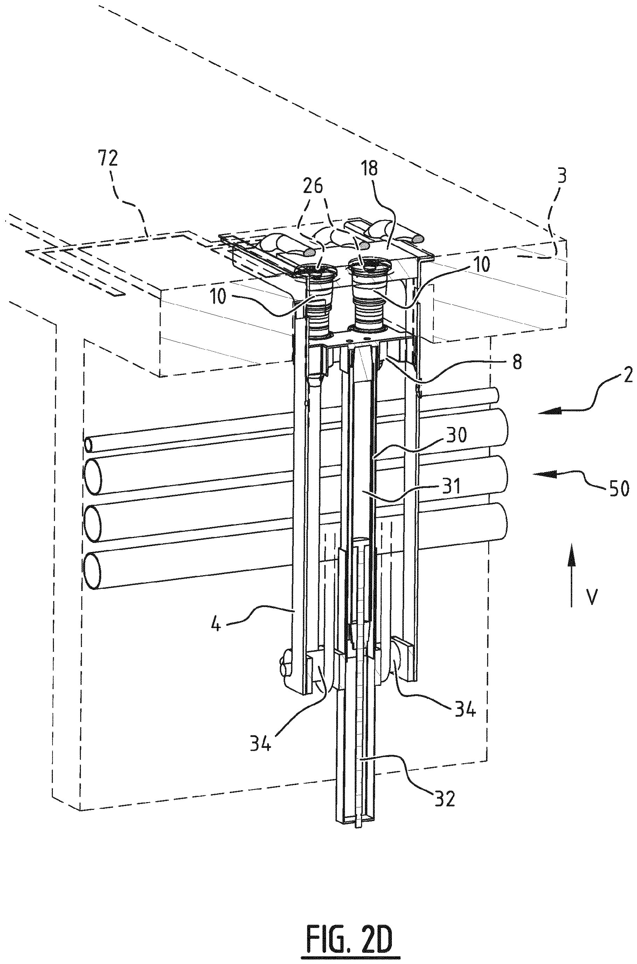

In the shown embodiment teat cups 10 (figure 2D) can be washed on underside 28 of cover plate 18. For this purpose teat cups 10 are pressed onto flushing device 26 when cover plate 18 wholly covers the ground surface. This can for instance be realized in simple manner when the milking device is in rest state 50 (see figure 2A).

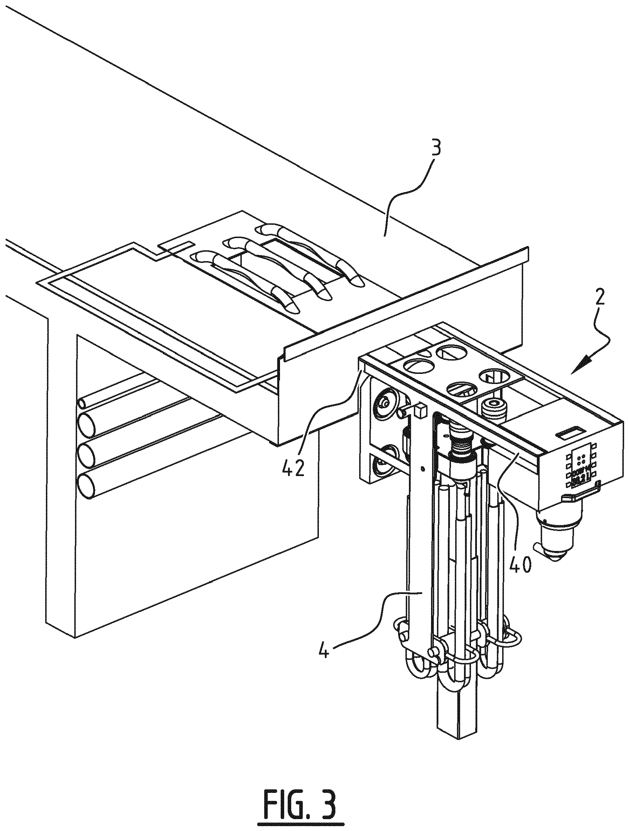

Milking device 2 (figure 3) can be removed from ground surface 3 as a whole. For this purpose milking device 2 comprises guides 40 which co-act with guides 42 provided on ground surface 3. Milking device 2 can hereby be removed from ground surface 3 in simple manner and be easily maintained, cleaned, repaired or replaced.

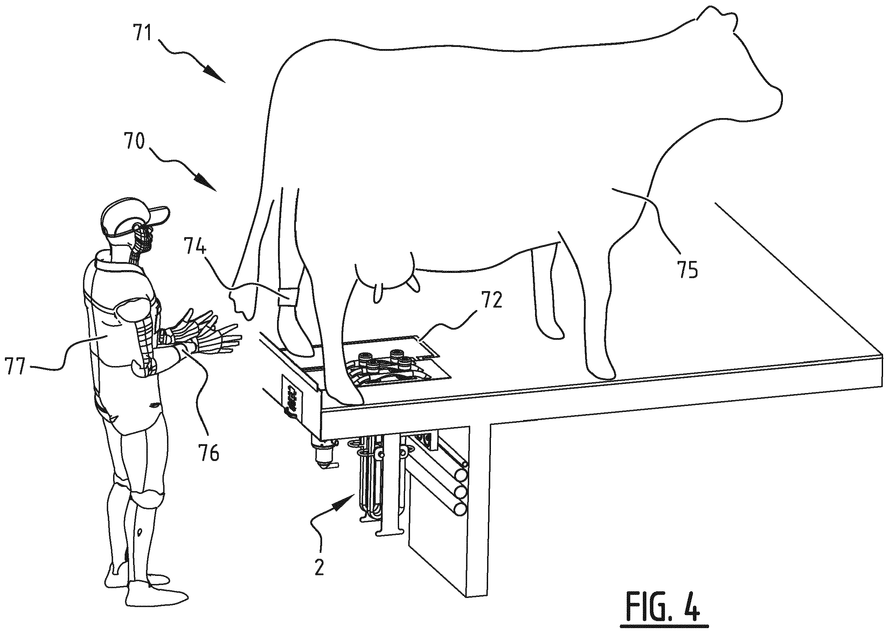

Milking system 70 (figure 4) arranged in milking parlour 71 comprises RFID antenna 72 arranged on milking device 2 and animal RFID tag 74 arranged on cow 75. Milking system 70 further comprises milker RFID tag 76 which is arranged on milker 77. RFID antenna 72 can communicate by means of a wireless RFID connection to animal RFID tag 74 and milker RFID tag 76. By means of animal RFID tag 74 RFID antenna 72 is easily able to recognize whether an animal and which animal 75 is standing above milking device 2, and whether a milker and which milker 77 is standing close to milking device 2.

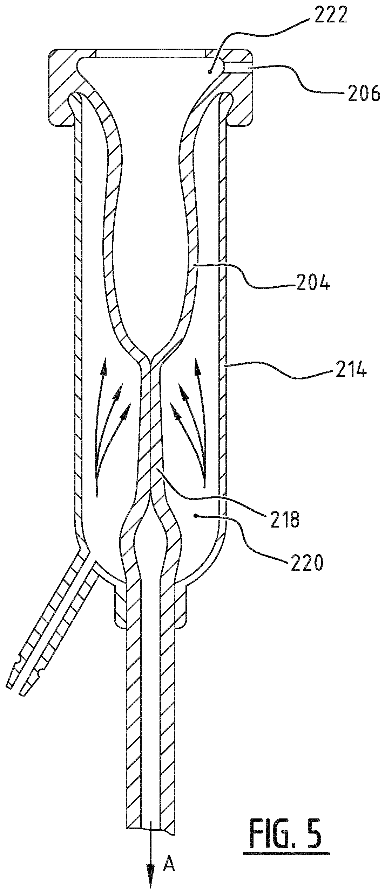

Teat cup 214 (figure 5) is provided with teat cup liner 204. Teat cup liner 204 is provided with flexible wall part 218 which extends substantially in the interior of a teat cup 214. During milking, a varying pressure is exerted in pulsation chamber 220 as a result of the pulsation, whereby wall part 218 is periodically compressed and opened so as to thereby exert a pulsating action on a teat. In the shown embodiment head or buffer area or teat chamber 222 is provided on the upper side of teat cup liner 204. Pressure compensator 206 provides for supply of air for regulating the pressure in head or teat chamber 222 thereby. It will be apparent to the skilled person that teat chamber 222 and/or pressure compensator 206 are not essential to the invention, and numerous embodiments are possible according to the invention without teat chamber 222 and/or pressure compensator 206. In an embodiment according to the invention pulsation chamber 220 is placed under pressure, for instance a pressure of 0.2 bar, such that flexible wall part 218 of teat cup liner 204 is compressed. Placing pulsation chamber 220 under pressure can for instance be realized with a 3/2 valve known from the prior art. A vacuum can hereby be created in the milk hose without "false" air being drawn in from teat chamber 222. The advantage hereof is that a milker can connect two teat cups 214 to the teats of the animal to be milked at the same time in simple manner without "false" air being drawn in at the other teat cups.

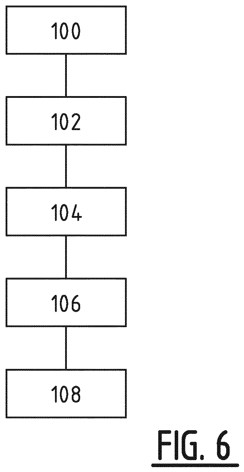

In an embodiment according to the invention milking device 2 is in rest state 50. In rest state 50 cover plate 18 wholly covers ground surface 3. Closure 14 is rotated about rotation axis 16 by rotation cylinder 24, whereby milking plate 20 partially closes ground surface 3. Teat cup carrier 8 is then moved upward in vertical direction V toward ground surface 3 by first stroke 100 (figure 6) of outer cylinder 30, whereby teat cups 10 are moved through openings 22 of milking plate 20. The starting position of first stroke 100 of outer cylinder 30 is figure 2A, while the end position of first stroke 100 of outer cylinder 30 is figure 2B.

After this, piston rod 32 is moved in vertical direction V toward ground surface 3 in inner space 31 of outer cylinder 30 by means of second stroke 102. Rollers 34 are hereby moved upward, with the result that milk hoses 12 obtain slack. Milking device 2 is then in milking state 52. The starting position of second stroke 102 of piston rod 32 is figure 2B and the end position of the second stroke 102 of piston rod 32 is figure 2C. With a milking device according to figure 2C a milker can easily take two teat cups 10 from teat cup carrier 8 at the same time and place them on the teats of the animal to be milked. Light source 60 can optionally give an indication that the milking process can be started. Valve unit 90 can further be controlled to carry milk to the desired flow. This choice depends for instance on the condition of the animal to be milked, the demand, and the like. The controlling of valve unit 90 is for instance dependent on information received by RFID antenna 72 from animal RFID tag 74 and milker RFID tag 76. The settings or startup of the milking process can also be controlled on the basis of RFID tag 74 and milker RFID tag 76, which are read by RFID antenna 72. After this, the milking process can start.

After milking, teat cups 10 are placed back on teat cup carrier 8 by the milker. Piston rod 32 is then moved in vertical direction V away from ground surface 3 with second stroke 104. Rollers 34 hereby engage on milk hoses 12, whereby milk hoses 12 are tightened. Unnecessary bending and/or kinking of milk hoses 12 before milking device 2 is returned back to rest state 50 is hereby prevented. An advantage hereof is that wear of milking device 2 is reduced. Second stroke 104 is opposite to second stroke 102.

Outer cylinder 30 is then moved in vertical direction V away from ground surface 3 by first stroke 106. Teat cup carrier 8 with teat cups 10 placed thereon is hereby moved to a position below ground surface 3. First stroke 106 is opposite to first stroke 102. After this, closure 14 can be rotated about rotation axis 16 by means of rotation cylinder 24 such that cover plate 18 wholly covers ground surface 3.

During step 108 teat cups 10 can then be moved upward against flushing device 26 which is mounted on underside 28 of cover plate 18. This realizes an easy cleaning of teat cups 10. It will be apparent to the skilled person that it is also possible in the discussed embodiments to reverse the outer cylinder and piston in terms of functionality. In the context of the invention the outer cylinder and piston can also be referred to as first and second cylinder.

The present invention is by no means limited to the above described embodiments thereof. The rights sought are defined by the following claims, within the scope of which many modifications can be envisaged.

## Claims

1. Milking device (2) for milking animals, comprising:
- a frame (4);
- a cylinder (6) connected operatively to the frame;
- a teat cup carrier (8) which is connected operatively to the cylinder and is movable relative to the frame by the cylinder; and
- a number of teat cups (10) placeable on or at the teat cup carrier, wherein milk hoses (12) can be connected to the teat cups for the purpose of discharging milk, wherein the cylinder is configured for bringing the milking device from a rest state (50) into a milking state (52), wherein in the rest state the teat cups are positioned wholly under a ground surface (3), wherein in the milking state the teat cups are positioned at least partially above the ground surface, and wherein the milking device is displaceable from a rest state to a milking state by the cylinder, **characterised in that** the cylinder is further configured to move the milking device between the rest state and the milking state using a first and second stroke, wherein:
- a first stroke which brings the teat cups at least partially above the ground surface; and
- a second stroke which co-displaces the milk hoses in the direction of the ground surface.

2. Milking device according to claim 1, wherein the cylinder is disposed substantially vertically during use.

3. Milking device according to claim 1 or 2, further comprising a closure (14) for at least partially closing the ground surface, wherein in the rest state the closure closes the ground surface wholly and in the milking state it closes the ground surface partially.

4. Milking device according to claim 3, wherein the closure is connected to the frame for rotation over a rotation axis (16), wherein the closure comprises a cover plate (18) and a milking plate (20), wherein in the rest state the cover plate closes the ground surface wholly and wherein the milking plate comprises a number of openings (22) for receiving the number of teat cups for the purpose of partially closing the ground surface.

5. Milking device according to claim 4, wherein the cover plate and the milking plate are placed at a radial distance from the rotation axis, wherein the cover plate and the milking plate have respectively a cover axis and a milking axis extending from the rotation axis to respectively the centre point of the cover plate and the milking plate, wherein the cover plate and the milking plate are positioned perpendicularly of their cover axis (80) and milking axis (82) and parallel to the rotation axis, and wherein the cover axis and the milking axis are arranged at a plate angle.

6. Milking device according to claim 5, wherein the plate angle lies in the range of 20°-160°, preferably in the range of 50°-130°, and is most preferably about 90°, and/or wherein the closure is rotated about the rotation axis by a rotation mechanism.

7. Milking device according to any one of the claims 4-6, wherein the closure comprises a flushing device (26) for flushing the number of teat cups, which is preferably arranged on the cover plate (18).

8. Milking device according to any one of the foregoing claims, wherein the milking device can be removed from the ground surface as a whole, wherein the frame preferably comprises a number of guides (40) for removal of the milking device from the ground surface.

9. Milking device according to any one of the foregoing claims, further comprising a light source (60) configured to project a status of the milking device, wherein the light source is preferably configured to serve as work light by projecting light onto an udder of the animal to be milked.

10. Milking device according to any one of the foregoing claims, further comprising a valve unit (90) for throughfeed of milk to at least one discharge conduit for consumption purposes and/or to a second discharge conduit for lower-quality uses.

11. Milking device according to any one of the foregoing claims, wherein the number of teat cups further comprises a pulsation chamber (220), wherein the pulsation chamber is placed under pressure during use in order to close the teat cup liner (204) such that the teat cup liner operates as a vacuum valve.

12. Milking system (70), comprising:
- a milking device (2) according to any one of the foregoing claims;
- an RFID antenna (72) arranged on the milking device;
- an animal RFID tag (74) arranged on an animal (75) to be milked; and
- a controller connected to the RFID antenna,
wherein the controller is configured to read the animal RFID tag with the RFID antenna for the purpose of recognizing the animal to be milked, further preferably comprising a milker RFID tag (76) arranged on a milker (77), wherein the controller is further configured to read the milker RFID tag with the RFID antenna for the purpose of recognizing the milker.

13. Milking parlour (71) provided with a milking device (2) and/or milking system (70) according to any one of the foregoing claims.

14. Method for milking an animal (75), comprising of:
- providing a milking device (2) or milking system (70) according to any one of the foregoing claims;
- moving the milking device from the rest state (50) to the milking state (52);
- connecting the number of teat cups (10) to a number of teats of the animal to be milked; and
- milking the animal.

15. Method according to claim 14, further comprising of:
- positioning the number of teat cups in or against a flushing device (26); and
- flushing a number of teat cups in a flushing state.

## Patentansprüche

1. Melkvorrichtung (2) zum Melken von Tieren, umfassend:
- einen Rahmen (4);
- einen Zylinder (6), der mit dem Rahmen wirkverbunden ist;
- einen Zitzenbecherträger (8), der mit dem Zylinder wirkverbunden ist und relativ zu dem Rahmen durch den Zylinder bewegbar ist; und
- eine Anzahl von Zitzenbechern (10), die auf oder an dem Zitzenbecherträger platzierbar sind, wobei Milchschläuche (12) mit den Zitzenbechern zum Zweck der Abgabe von Milch verbunden werden können, wobei der Zylinder konfiguriert ist, um die Melkvorrichtung aus einem Ruhezustand (50) in einen Melkzustand (52) zu bringen, wobei in dem Ruhezustand die Zitzenbecher vollständig unter einer Bodenoberfläche (3) positioniert sind, wobei in dem Melkzustand die Zitzenbecher mindestens teilweise über der Bodenoberfläche positioniert sind, und wobei die Melkvorrichtung von einem Ruhezustand in einen Melkzustand durch den Zylinder verschiebbar ist, **dadurch gekennzeichnet, dass** der Zylinder ferner konfiguriert ist, um die Melkvorrichtung zwischen dem Ruhezustand und dem Melkzustand unter Verwendung eines ersten und eines zweiten Hubs zu bewegen, wobei:
- einen ersten Hub, der die Zitzenbecher mindestens teilweise über die Bodenoberfläche bringt; und
- einen zweiten Hub, der die Milchschläuche in Richtung der Bodenoberfläche mitverschiebt.

2. Melkvorrichtung nach Anspruch 1, wobei der Zylinder während der Verwendung im Wesentlichen vertikal eingerichtet ist.

3. Melkvorrichtung nach Anspruch 1 oder 2, ferner umfassend einen Verschluss (14) zum mindestens teilweisen Verschließen der Bodenoberfläche, wobei in dem Ruhezustand der Verschluss die Bodenoberfläche vollständig verschließt und er in dem Melkzustand die Bodenoberfläche teilweise verschließt.

4. Melkvorrichtung nach Anspruch 3, wobei der Verschluss mit dem Rahmen für eine Drehung über einer Drehachse (16) verbunden ist, wobei der Verschluss eine Deckplatte (18) und eine Melkplatte (20) umfasst, wobei die Deckplatte in dem Ruhezustand die Bodenoberfläche vollständig verschließt, und wobei die Melkplatte eine Anzahl von Öffnungen (22) zum Aufnehmen der Anzahl von Zitzenbechern zum Zweck des teilweisen Verschließens der Bodenoberfläche umfasst.

5. Melkvorrichtung nach Anspruch 4, wobei die Deckplatte und die Melkplatte in einem radialen Abstand von der Drehachse platziert sind, wobei die Deckplatte und die Melkplatte jeweils eine Deckachse und eine Melkachse aufweisen, die sich von der Drehachse zu jeweils dem Mittelpunkt der Deckplatte und der Melkplatte erstrecken, wobei die Deckplatte und die Melkplatte senkrecht zu ihrer Deckachse (80) und der Melkachse (82) und parallel zu der Drehachse positioniert sind, und wobei die Deckachse und die Melkachse in einem Plattenwinkel angeordnet sind.

6. Melkvorrichtung nach Anspruch 5, wobei der Plattenwinkel in dem Bereich von 20°-160°, vorzugsweise in dem Bereich von 50°-130°, liegt und am meisten bevorzugt ungefähr 90° beträgt und/oder wobei der Verschluss durch einen Drehmechanismus um die Drehachse gedreht wird.

7. Melkvorrichtung nach einem der Ansprüche 4 bis 6, wobei der Verschluss eine Spülvorrichtung (26) zum Spülen der Anzahl von Zitzenbechern umfasst, die vorzugsweise auf der Deckplatte (18) angeordnet ist.

8. Melkvorrichtung nach einem der vorstehenden Ansprüche, wobei die Melkvorrichtung als Ganzes von der Bodenoberfläche entfernt werden kann, wobei der Rahmen vorzugsweise eine Anzahl von Führungen (40) zum Entfernen der Melkvorrichtung von der Bodenoberfläche umfasst.

9. Melkvorrichtung nach einem der vorstehenden Ansprüche, ferner umfassend eine Lichtquelle (60), die konfiguriert ist, um einen Zustand der Melkvorrichtung zu projizieren, wobei die Lichtquelle vorzugsweise konfiguriert ist, um als Arbeitslicht durch Projizieren von Licht auf ein Euter des zu melkenden Tieres zu dienen.

10. Melkvorrichtung nach einem der vorstehenden Ansprüche, ferner umfassend eine Ventileinheit (90) zum Durchführen von Milch zu mindestens einer Entladungsleitung für Verbrauchszwecke und/oder zu einer zweiten Entladungsleitung für Verwendungen niedrigerer Qualität.

11. Melkvorrichtung nach einem der vorstehenden Ansprüche, wobei die Anzahl der Zitzenbecher ferner eine Pulsationskammer (220) umfasst, wobei die Pulsationskammer während des Gebrauchs unter Druck gesetzt wird, um die Zitzenbecherauskleidung (204) derart zu verschließen, dass die Zitzenbecherauskleidung als Vakuumventil arbeitet.

12. Melksystem (70), umfassend:
- eine Melkvorrichtung (2) nach einem der vorstehenden Ansprüche;
- eine RFID-Antenne (72), die auf der Melkvorrichtung angeordnet ist;
- ein Tier-RFID-Etikett (74), das an einem zu melkenden Tier (75) angeordnet ist; und
- eine Steuerung, die mit der RFID-Antenne verbunden ist,
wobei die Steuerung konfiguriert ist, um das Tier-RFID-Etikett mit der RFID-Antenne zum Zweck des Erkennens des zu melkenden Tieres zu lesen, ferner vorzugsweise umfassend ein Melker-RFID-Etikett (76), das an einem Melker (77) angeordnet ist, wobei die Steuerung ferner konfiguriert ist, um das Melker-RFID-Etikett zum Zweck des Erkennens des Melkers zu lesen.

13. Melkstand (71), der mit einer Melkvorrichtung (2) und/oder einem Melksystem (70) nach einem der vorstehenden Ansprüche versehen ist;

14. Verfahren zum Melken eines Tieres (75), umfassend:
- Bereitstellen einer Melkvorrichtung (2) und/oder eines Melksystems (70) nach einem der vorstehenden Ansprüche;
- Bewegen der Melkvorrichtung von dem Ruhezustand (50) in den Melkzustand (52);
- Verbinden der Anzahl von Zitzenbechern (10) mit einer Anzahl von Zitzen des zu melkenden Tieres; und
- Melken des Tieres.

15. Verfahren nach Anspruch 14, ferner umfassend:
- Positionieren der Anzahl von Zitzenbechern in oder an einer Spülvorrichtung (26); und
- Spülen einer Anzahl von Zitzenbechern in einem Spülzustand.

## Revendications

1. Dispositif de traite (2) permettant de traire des animaux, comprenant :
- un châssis (4) ;
- un cylindre (6) relié de manière fonctionnelle au châssis ;
- un porte-gobelet trayeur (8) qui est relié de manière fonctionnelle au cylindre et est mobile par rapport au châssis par le cylindre ; et
- un nombre de gobelets trayeurs (10) pouvant être placés sur ou au niveau du porte-gobelet trayeur, dans lequel des tuyaux à lait (12) peuvent être raccordés aux gobelets trayeurs dans le but de décharger du lait, dans lequel le cylindre est conçu pour amener le dispositif de traite d'un état de repos (50) à un état de traite (52), dans lequel, dans l'état de repos, les gobelets trayeurs sont positionnés entièrement sous une surface de sol (3), dans lequel, dans l'état de traite, les gobelets trayeurs sont positionnés au moins partiellement au-dessus de la surface de sol, et dans lequel le dispositif de traite peut être déplacé d'un état de repos à un état de traite par le cylindre, **caractérisé en ce que** le cylindre est conçu en outre pour déplacer le dispositif de traite entre l'état de repos et l'état de traite à l'aide d'une première et d'une seconde course, dans lequel :
- une première course qui amène les gobelets trayeurs au moins partiellement au-dessus de la surface de sol ; et
- une seconde course qui déplace conjointement les tuyaux à lait dans la direction de la surface de sol.

2. Dispositif de traite selon la revendication 1, dans lequel le cylindre est disposé de manière sensiblement verticale pendant l'utilisation.

3. Dispositif de traite selon la revendication 1 ou 2, comprenant en outre une fermeture (14) permettant de fermer au moins partiellement la surface de sol, dans lequel, dans l'état de repos, la fermeture ferme la surface de sol entièrement et, dans l'état de traite, elle ferme la surface de sol partiellement.

4. Dispositif de traite selon la revendication 3, dans lequel la fermeture est reliée au châssis pour une rotation sur un axe de rotation (16), dans lequel la fermeture comprend une plaque de couverture (18) et une plaque de traite (20), dans lequel, dans l'état de repos, la plaque de couverture ferme la surface de sol entièrement et dans lequel la plaque de traite comprend un nombre d'ouvertures (22) permettant de recevoir le nombre de gobelets trayeurs dans le but de fermer partiellement la surface de sol.

5. Dispositif de traite selon la revendication 4, dans lequel la plaque de couverture et la plaque de traite sont placées à une distance radiale de l'axe de rotation, dans lequel la plaque de couverture et la plaque de traite ont respectivement un axe de couverture et un axe de traite s'étendant à partir de l'axe de rotation jusqu'à respectivement le point central de la plaque de couverture et la plaque de traite, dans lequel la plaque de couverture et la plaque de traite sont positionnées perpendiculairement à leur axe de couverture (80) et leur axe de traite (82) et parallèles à l'axe de rotation, et dans lequel l'axe de couverture et l'axe de traite sont agencés selon un angle de plaque.

6. Dispositif de traite selon la revendication 5, dans lequel l'angle de plaque se situe dans la plage de 20° à 160°, de préférence dans la plage de 50° à 130°, et vaut le plus préférablement environ 90°, et/ou dans lequel la fermeture est mise en rotation autour de l'axe de rotation par un mécanisme de rotation.

7. Dispositif de traite selon l'une quelconque des revendications 4 à 6, dans lequel la fermeture comprend un dispositif de rinçage (26) permettant de rincer le nombre de gobelets trayeurs, lequel est de préférence agencé sur la plaque de couverture (18).

8. Dispositif de traite selon l'une quelconque des revendications précédentes, dans lequel le dispositif de traite peut être retiré de la surface de sol dans son ensemble, dans lequel le châssis comprend de préférence un nombre de guides (40) pour le retrait du dispositif de traite par rapport à la surface de sol.

9. Dispositif de traite selon l'une quelconque des revendications précédentes, comprenant en outre une source de lumière (60) configurée pour projeter un statut du dispositif de traite, dans lequel la source de lumière est de préférence configurée pour servir de lampe de travail en projetant de la lumière sur un pis de l'animal à traire.

10. Dispositif de traite selon l'une quelconque des revendications précédentes, comprenant en outre une unité de vanne (90) pour la distribution de lait vers au moins un conduit de décharge à des fins de consommation et/ou vers un second conduit de décharge pour des utilisations de moindre qualité.

11. Dispositif de traite selon l'une quelconque des revendications précédentes, dans lequel le nombre de gobelets trayeurs comprend en outre une chambre de pulsation (220), dans lequel la chambre de pulsation est placée sous pression pendant l'utilisation afin de fermer le revêtement de gobelet trayeur (204) de telle sorte que le revêtement de gobelet trayeur fonctionne en tant que reniflard.

12. Système de traite (70), comprenant :
- un dispositif de traite (2) selon l'une quelconque des revendications précédentes ;
- une antenne RFID (72) agencée sur le dispositif de traite ;
- une étiquette RFID d'animal (74) agencée sur un animal (75) à traire ; et
- un organe de commande connecté à l'antenne RFID,
dans lequel l'organe de commande est configuré pour lire l'étiquette RFID d'animal avec l'antenne RFID dans le but de reconnaître l'animal à traire, de préférence encore comprenant une étiquette RFID de trayeur (76) agencée sur un trayeur (77), dans lequel l'organe de commande est configuré en outre pour lire l'étiquette RFID de trayeur avec l'antenne RFID dans le but de reconnaître le trayeur.

13. Salle de traite (71) pourvue d'un dispositif de traite (2) et/ou d'un système de traite (70) selon l'une quelconque des revendications précédentes.

14. Procédé permettant de traire un animal (75), comprenant :
- la fourniture d'un dispositif de traite (2) ou d'un système de traite (70) selon l'une quelconque des revendications précédentes ;
- le mouvement du dispositif de traite de l'état de repos (50) à l'état de traite (52) ;
- la liaison du nombre de gobelets trayeurs (10) à un nombre de trayons de l'animal à traire ; et
- la traite de l'animal.

15. Procédé selon la revendication 14, comprenant en outre :
- le positionnement du nombre de gobelets trayeurs dans ou contre un dispositif de rinçage (26) ; et
- le rinçage d'un nombre de gobelets trayeurs dans un état de rinçage.
